# EUROPEAN PATENT APPLICATION

(11) **EP 4 681 870 A1**
(43) Date of publication of application: **21.01.2026**
(21) Application number: 24770741.7
(22) Date of filing: 07.03.2024
(51) Int. Cl.: B23Q 11/10, B23Q 17/00, B23Q 17/24

(54) **MACHINE TOOL, COOLANT CONTROL METHOD, AND PROGRAM FOR MACHINE TOOL**

(30) Priority: 14.03.2023 JP 2023039647
(71) Applicant: DMG Mori Co., Ltd., Yamatokoriyama-shi, Nara 639-1160 (JP)
(72) Inventor: KANDA, Satoshi, Yamatokoriyama-shi, Nara 639-1160 (JP); FUNAKOSHI, Genki, Yamatokoriyama-shi, Nara 639-1160 (JP)
(74) Representative: Isarpatent
(86) International application number: PCT/JP2024/008909
(87) International publication number: WO 2024/190635

(57) **Abstract**

A machine tool includes an operation panel 1 that is provided at a position outside the machine tool where an operator can observe an interior state of the machine tool, or that is configured to allow an image of the interior state of the machine tool to be checked. The operation panel 1 includes a reception device 2 configured to receive an operation for changing a current set value by a predetermined value or changing the current set value by a predetermined multiple, and a controller C includes a set value update unit 41 configured to update the current set value to another value in response to the operation received by the reception device 2.

## Description

### Technical Field

The present invention relates to a machine tool configured to be able to control, for example, the pressure of coolant discharged into the machine.

### Background Art

For example, there is a coolant supply method of supplying coolant to the inside of a machine tool called through spindle coolant, in which a through path is formed in the tool and the spindle, and the coolant is injected from the leading end of the tool. In this coolant supply method, coolant stored in a tank is suctioned by a pump device, pressurized, and supplied to the tool side, thereby injecting the coolant from the tool. At that time, if the coolant pressure is too high, a large amount of coolant is returned to the tank from a relief valve provided on the discharge side of the pump device, resulting in energy waste.

In the invention described in Patent Document 1, the pressure of coolant discharged from the pump device is controlled and maintained at a constant target pressure slightly lower than a threshold pressure at which the coolant returns to the tank via the relief valve, thereby reducing the amount of wasted coolant. Specifically, a pressure sensor is installed in the flow path, and the frequency of a current applied to the motor of the pump device is changed by pressure feedback control based on the measured pressure. Also, since the frequency at which the above-described target pressure can be achieved varies depending on factors such as tool diameter, experiments are conducted in advance to obtain the frequencies at which the coolant begins to return from the relief valve for tools, and the initially set frequency is also changed according to the tool attached to the spindle.

In other words, in the above-described coolant control method, the pressure is always maintained at a predetermined target pressure, and thus only the state is realized where the coolant is injected at the maximum force from the leading end of the tool.

However, depending on the machining conditions or the like, there is a need to reduce the force of the coolant and adjust it to a more appropriate level, instead of discharging the coolant at the maximum force as described above. In such a case, it is possible to obtain a desired force by editing the coolant pressure value set in M code of an NC program and then executing the coolant supply. The same result can also be obtained by changing the frequency value on the screen for editing the frequency of a current applied to the motor provided by the software, pressing the "Decide" button to reflect the change in frequency, and then executing the coolant supply again, as in the invention described in Patent Document 1.

However, this requires work of editing the NC program and the drive frequency of the motor, and thus it is difficult to achieve the coolant discharge most appropriate for the machining conditions by for example, checking the status of discharging the coolant into the machine during machining and simultaneously increasing or decreasing the coolant pressure successively. In other words, there is no user interface that has been sufficiently considered for the conventional adjustment work relating to coolant supply into the machine, and thus the user interface is not easy to use by operators.

### Citation List

### Patent Document

Patent Document 1: JP 5269955B

### Summary of Invention

### Technical Problem

The present invention was made in view of the above-described problems, and aims to provide a machine tool that is easy to use and allows the pressure and flow rate of coolant to be easily adjusted to values suitable for machining conditions and other purposes while checking the state of coolant supply into the machine.

### Solution to Problem

That is, a machine tool according to the present invention includes: a discharge mechanism configured to discharge coolant into the machine tool; a tank configured to store the coolant to be supplied to the discharge mechanism; a pump device that is provided on a flow path connecting the tank and the discharge mechanism and configured to pump the coolant; a fluid sensor that is provided on the flow path and configured to measure a pressure or flow rate of the coolant flowing on the flow path; a controller configured to control the pump device based on a deviation between a set value relating to the pressure or flow rate of the coolant and a measured value measured by the fluid sensor; and an operation panel that is provided at a position outside the machine tool where an operator can observe an interior state of the machine tool, or that is configured to allow an image of the interior state of the machine tool to be checked, wherein the operation panel includes a reception device configured to receive an operation for changing a current set value by a predetermined value or changing the current set value by a predetermined multiple, and the controller includes a set value update unit configured to update the current set value to another value in response to the operation received by the reception device.

With this configuration, since the operator can change the set values on the reception device provided on the operation panel as needed while viewing the interior state where the coolant is being supplied, it is easier to set and use the conditions of the pressure or flow rate of the coolant, compared to in conventional cases. Therefore, it is easier to realize coolant supply conditions according to various purposes such as machining conditions and chip-free flow.

To make the operation on the reception device by the operator simple to omit the final approval action on the operation, and to make the setting work easier while checking the coolant supply state within the machine tool, the reception device may be configured to accept a touch operation or a rotation operation from the operator, and the set value update unit may be configured to update the set value immediately upon receiving an operation on the reception device.

In order to reduce the likelihood of operational errors or the like even when the operator performs the work of adjusting the set value while checking the coolant supply state within the machine tool, the reception device may include a decrease operation key for decreasing the set value and a physical increase operation key for increasing the set value, and the decrease operation key and the increase operation key may be configured to receive a push operation.

In order to easily prevent accidental operation of a spindle or table when performing the operation for adjusting the coolant supply state, the operation panel may further include a speed-related operation key or operation dial configured to receive an operation for changing a speed of the table or spindle, and the reception device may be provided separately from the speed-related operation key or operation dial.

As a specific mode that allows the operator to easily adjust the set value while directly checking the coolant supply state within the machine tool, the machine tool may further include an observation window that is formed in a cover body or door that separates the inside from the outside, and is used to observe the inside of the machine tool from the outside, wherein the operation panel may be provided near the observation window.

As a mode that makes it easier for the operator to check the coolant supply state inside the machine tool while viewing only the operation panel, and adjust the set value to an appropriate value, and that increases the degree of freedom in position of the operation panel or omit the observation window for safety reasons, the machine tool may further include a camera provided inside the machine tool, wherein the operation panel may further include a display that displays a moving image captured by the camera.

When the same machining process is performed, in order that the previously adjusted set value is automatically set, so that the burden on the operator is reduced and usability is improved and automation is facilitated, the machine tool may further include a set value storage unit configured to store at least the set value in initial setting and output the set value to the set value update unit, wherein the set value storage unit may be configured to store a pair of changed set value, which is a set value changed by the operation on the reception device, and process data that indicates information relating to a machining process in which the changed set value is used, and if there is the changed set value that corresponds to the input process data, the set value storage unit may be configured to output the changed set value to the set value update unit.

As a specific mode for controlling the pressure or flow rate of the coolant, the pump device may include a pump and a motor configured to drive the pump, and the controller may include: an inverter configured to supply a current at a set frequency to the motor; and a frequency setting unit configured to set the frequency of the current output by the inverter so that the deviation between the set value and the measured value is small.

For example, in order to perform control so that the coolant is injected reliably even when the coolant is difficult to be injected without high pressure, such as with a through spindle coolant, the fluid sensor may be a pressure sensor provided on the flow path between the discharge mechanism and the pump device, and the controller may be configured to perform pressure feedback control on the pump device.

In order to limit the amount of coolant to be supplied to the inside of the machine tool to a predetermined amount or less while satisfying machining conditions and the like so as to reduce the consumption of coolant and energy, thereby making it easier to realize energy saving, the fluid sensor may be a flow rate sensor provided on the flow path between the discharge mechanism and the pump device, and the controller may be configured to perform flow rate feedback control on the pump device.

A coolant control method according to the present invention is directed to a coolant control method using a machine tool provided with: a discharge mechanism configured to discharge coolant into the machine tool; a tank configured to store the coolant to be supplied to the discharge mechanism; a pump device that is provided on a flow path connecting the tank and the discharge mechanism and configured to pump the coolant; a fluid sensor that is provided on the flow path and configured to measure a pressure or flow rate of the coolant flowing on the flow path; a controller configured to control the pump device based on a deviation between a set value relating to the pressure or flow rate of the coolant and a measured value measured by the fluid sensor; and an operation panel that is provided at a position outside the machine tool where an operator can observe an interior state of the machine tool, or that is configured to allow an image of the interior state of the machine tool to be checked, the operation panel including a reception device configured to receive an operation for changing a current set value by a predetermined value or changing the current set value by a predetermined multiple, wherein the controller is caused to update the current set value to another value in response to the operation received by the reception device. With this coolant control method, the operator can easily adjust the set value while checking the coolant supply state inside the machine tool.

For example, in order to achieve the same effects as the machine tool of the present invention by replacing an operation panel installed on an existing machine tool and updating a program, it is sufficient to use a machine tool program used in a machine tool provided with: a discharge mechanism configured to discharge coolant into the machine tool; a tank configured to store the coolant to be supplied to the discharge mechanism; a pump device that is provided on a flow path connecting the tank and the discharge mechanism and configured to pump the coolant; a fluid sensor that is provided on the flow path and configured to measure a pressure or flow rate of the coolant flowing on the flow path; a controller configured to control the pump device based on a deviation between a set value relating to the pressure or flow rate of the coolant and a measured value measured by the fluid sensor; and an operation panel that is provided at a position outside the machine tool where an operator can observe an interior state of the machine tool, or that is configured to allow an image of the interior state of the machine tool to be checked, the operation panel including a reception device configured to receive an operation for changing a current set value by a predetermined value or changing the current set value by a predetermined multiple, wherein the controller functions as a set value update unit configured to update the current set value to another value in response to the operation received by the reception device. Note that the machine tool program may be a program distributed electronically or recorded on a program storage medium such as a CD, DVD, or flash memory.

### Advantageous Effects of Invention

According to the machine tool of the present invention, it is easy to realize a coolant supply state that corresponds to machining conditions and other purposes by adjusting the set value while checking the state of coolant supply into the machine.

### Brief Description of Drawings

FIG. 1 is a schematic perspective view showing the appearance of a machine tool according to a first embodiment of the present invention.
FIG. 2 is a schematic view showing an operation panel of the machine tool according to the first embodiment.
FIG. 3 is an enlarged view of a group of operation keys on the operation panel of the first embodiment.
FIG. 4 is a schematic view showing a configuration relating to a coolant circuit of the first embodiment.
FIG. 5 is a schematic view showing a configuration for controlling the pressure of coolant according to the first embodiment.
FIG. 6 is a schematic view showing a configuration for controlling the flow rate of coolant in a machine tool according to a second embodiment.

### Description of Embodiments

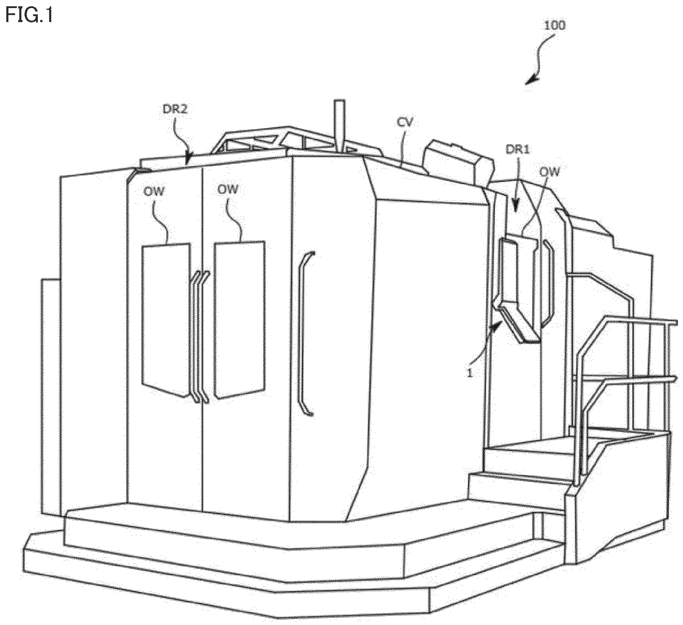

Hereinafter, a machine tool 100 according to a first embodiment of the present invention will be described with reference to the drawings. FIG. 1 is a diagram showing the appearance of the machine tool 100. In the context of the present specification, the term "machine tool" is a concept that includes various apparatuses having the function of machining workpieces. In the present specification, a lateral machining center is used as an example of the machine tool 100, but the machine tool 100 is not limited to this. For example, the machine tool 100 may be a vertical machining center. The machine tool 100 may also be a turning center, a 5-axis processing machine, or a multitasking processing machine. In addition, the machine tool 100 may be a grinding machine or other cutting machine. Also, machining is a concept that can include not only removal processing but also adding processing.

As shown in FIG. 1, the machine tool 100 is provided with a cover body CV that separates the inside from the outside of the machine tool, multiple doors DR1 and DR2 that are openable and closable, and an operation panel 1. The machine tool 100 has, inside thereof, a machining area where cutting is performed, and a waiting area that is separated by an inner door and where the waiting next workpiece is placed on a pallet. One door is the machining area door DR1 for accessing the machining area from outside the machine, and the other door is the waiting area door DR2 for accessing the waiting area from outside the machine. Each door has an observation window (OW) that allows the inside of the machine tool to be observed from outside. The operation panel 1 is provided near the machining area door DR1. The operator stands in front of the machining area door DR1 while standing in front of the operation panel 1. In other words, the operator can observe the inside of the machine tool, particularly the coolant supply state, through the observation window OW only by slightly turning his or her body toward the machining area while operating the operation panel 1.

A cover body CV, which is also referred to as a splash guard, forms the appearance of the machine tool 100 and separates the inside from the outside of the machine tool 100.

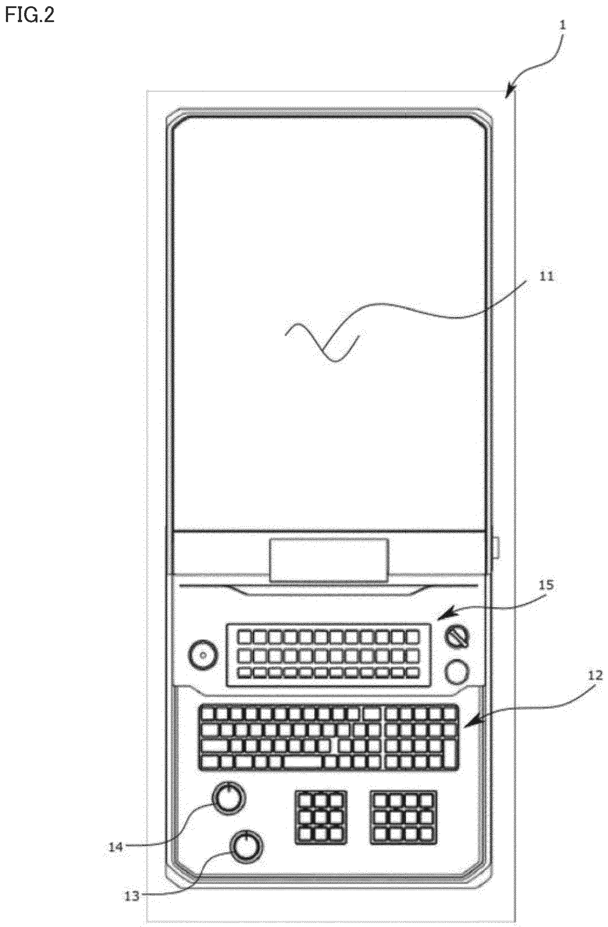

The operation panel 1 is constituted by, for example, a general-purpose computer, and has an upper casing and a lower casing that are rotatably coupled to each other by a hinge mechanism in the central portion. As shown in FIG. 2, the upper casing of the operation panel 1 is equipped with a display 11 for displaying various information on machining. The display 11 is, for example, a liquid crystal display or an organic EL display, and is configured as a touch panel display. The operator can also perform various operations relating to the machine tool 100 by touching this display 11.

The lower casing of the operation panel 1 at least includes: a keyboard 12 used to edit an NC program and perform various operations, for example; a first operation dial 13 for adjusting the feed rate of a table (not shown) and a spindle S; a second operation dial 14 for adjusting the override with respect to the feed rate; and an operation key group 15 in the form of bars that are arranged in three rows in the horizontal direction and used to operate the components constituting the machine tool 100.

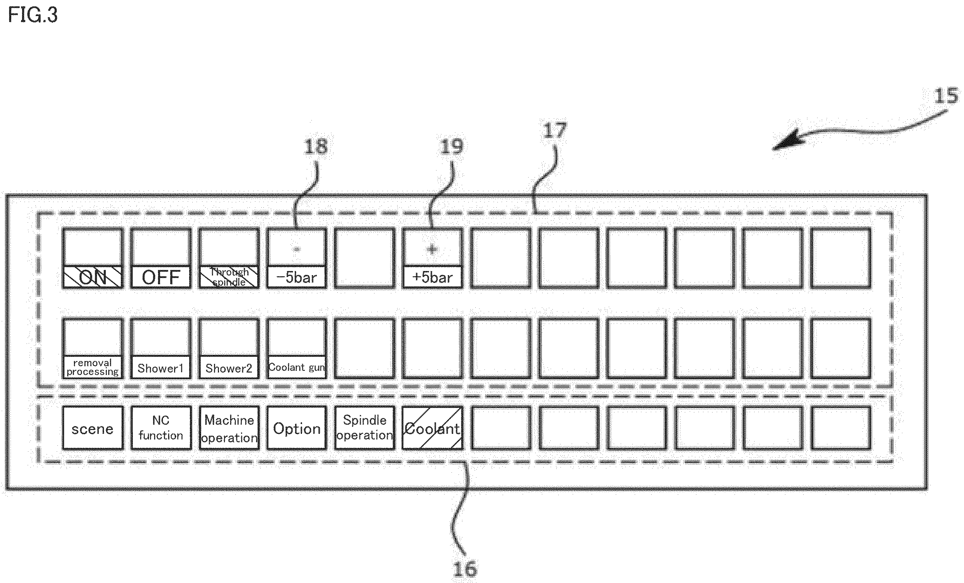

The operation key group 15 consists of a combination of physical keys and LCD, and as shown in FIG. 3, when a function item used in a function change area 16 consisting of multiple operation keys set in the lowest row is selected, the display of each operation key for an operation area 17 consisting of multiple operation keys in the upper two rows and the assigned function are configured to be changed. In other words, assigning a corresponding operation key to select each function from multiple types of items would result in a large number of keys and a configuration that is difficult to understand. However, for each of the types of item, a different function is assigned to each operation key in the operation area 17, and the display is also changed accordingly.

FIG. 3 shows the state where a coolant button for performing operations relating to coolant supply and the like is selected in the function change area 16. Accordingly, a function for switching coolant on and off, and a function for selecting, from a plurality of coolant discharge mechanisms 2 installed in the machine, any one coolant discharge mechanism 2 that is to discharge coolant are assigned to the operation keys in the operation area 17, and the display of the operation keys is also changed to display corresponding to the case where the coolant button is selected. In particular, when a coolant operation key is selected in the function change area 16, operation keys for changing the set value of the pressure of the coolant to be discharged into the machine appear. That is, in FIG. 3, a decrease operation key 18 for decreasing the set value of the pressure of the coolant and an increase operation key 19 for increasing the set value of the pressure are set in the operation area 17. The decrease operation key 18 and the increase operation key 19 in the first embodiment correspond to a reception device in the claims, and are configured to receive operations from the operator to change the current set value by a predetermined amount. In the first embodiment, the set value can be changed by 5 bar each time the corresponding operation key is pressed. Note that the manner in which the set value is changed is not limited to this, and the amount of change may be proportional or correlated to the time for which the operation key is being pressed. Also, the current set value may be set to change by a predetermined multiple according to the number of times each operation key is pressed or the time for which the operation key is being pressed.

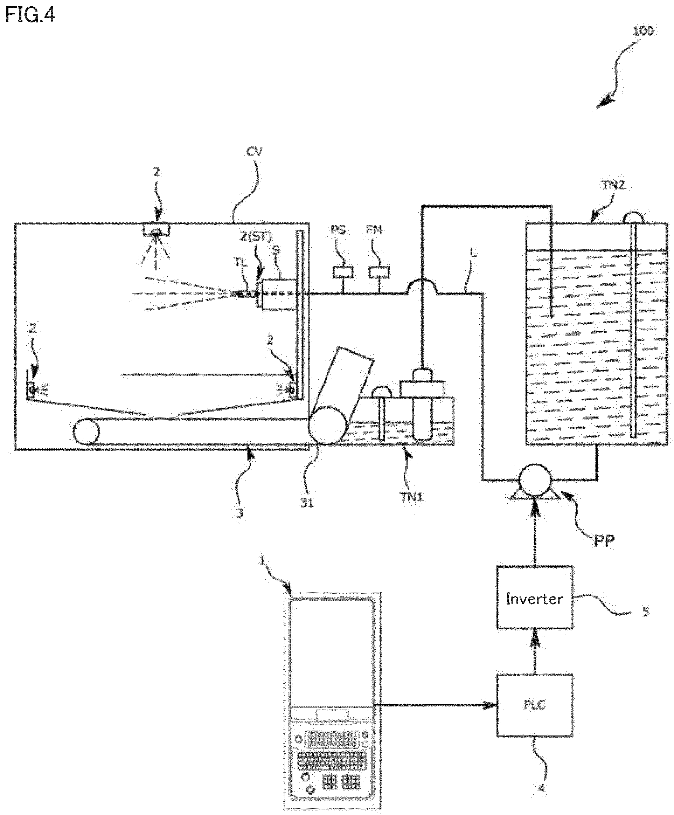

Next, a configuration relating to a coolant circuit of the machine tool 100 according to the first embodiment will be described with reference to FIG. 4. Note that in FIG. 4, the actual layout of the components may differ from the illustration in order to clarify the functional connections. Therefore, FIG. 4 may not accurately represent the structure, size, location, and the like of each of the components. Also, the explanations of mechanisms of the machine tool 100, such as a table, ATC, and CNC commonly used in machine tools, are omitted, but existing mechanisms can be used, for example.

As shown in FIG. 4, the coolant circuit circulates coolant between the inside and outside of the machine tool 100, and is configured to collect dirty coolant (hereinafter referred to as "dirty coolant") that was used inside the machine and contains chips, lubricating oil, and the like, remove the chips and lubricating oil to obtain coolant (hereinafter referred to as "clean coolant"), and supply the clean coolant again to the inside of the machine tool.

This coolant circuit includes: the discharge mechanisms 2 for discharging coolant into the machine tool; a chip conveyor 3 for removing chips and the like from the collected dirty coolant used inside the machine and discarding the chips to the outside; a flat collection tank TN1 that stores the coolant from which chips were removed by the chip conveyor 3; a vertical storage tank TN2 to which the dirty coolant from which chips were removed is transferred from the collection tank TN1 and that stores the transferred coolant; and a pump device PP that pumps clean coolant purified by various types of separation mechanisms (not shown) installed in or downstream the storage tank TN2 and supplies it to the discharge mechanisms 2. Accordingly, the coolant is designed to circulate in this coolant circuit.

The components will be described in detail. The discharge mechanisms 2 provided inside the machine tool 100 are provided in modes corresponding to various purposes of use. To explain the discharge mechanisms 2, some representative examples of the discharge mechanisms 2 include a discharge mechanism 2 installed in the ceiling to supply shower coolant, a discharge mechanism 2 configured to pass chips in a chip tray installed in the lower portion of the machine tool 100 to the chip conveyor 3, and a discharge mechanism 2 configured to discharge coolant from the leading end of a tool TL to realize lubrication and cooling during machining. There are various usages that are not described here, and the discharge mechanisms 2 are provided in appropriate locations for the usages. The discharge mechanisms 2 are configured as nozzles, for example, and spray coolant pressurized by the pump device PP into the machine. In the following description, particularly, a through spindle coolant mechanism ST is taken as an example of the discharge mechanism 2. The through spindle coolant mechanism ST is formed in a manner such that a through path is provided in the tool TL and a spindle S, so that coolant is discharged directly from the leading end of the tool TL to a machining point or the like. In the first embodiment, the through spindle coolant mechanism ST can be adjustable by the operator according to, for example, the machining process and machining conditions so that the coolant is discharged from the leading end of the tool TL at an appropriate pressure.

The chip conveyor 3 scrapes out chips contained in the coolant using a conveyor housed in a casing and discharges the chips into a chip bucket disposed outside the machine, for example. Also, a cylindrical metal filter 31 is installed inside the chip conveyor 3 to filter out small metal pieces and the like. The coolant that has passed through the metal filter 31 is designed to flow into the collection tank TN1.

In the lower portion of the machine tool 100, the collection tank TN1 is lined up in the width direction (paper back side) of the chip conveyor 3, but for clarity, FIG. 4 shows the collection tank TN1 lined up in the longitudinal direction of the chip conveyor 3. The coolant collected in the collection tank TN1 is pumped to the upper side of the downstream storage tank TN2 by a transfer pump.

The storage tank TN2 functions as a buffer for coolant, and clean coolant that has passed through the storage tank TN2 is pumped by the pump device PP and supplied to the discharge mechanisms 2. Note that, for clarity, FIG. 4 shows only a flow path L between the through spindle mechanism ST and the pump device PP, but other discharge mechanisms 2 are connected to the storage tank TN2. A pressure sensor PS and a flow rate sensor FM are respectively installed on the flow path L as fluid sensors for measuring the pressure and flow rate of the coolant discharged as through spindle coolant.

The rotating speed of the pump device PP is controlled by changing the frequency of a current input from an inverter 5. In the first embodiment, the frequency output by the inverter 5 is controlled by pressure feedback control so that the deviation between the measured pressure measured by the pressure sensor PS and the set pressure, which is a set value, is small. Here, the function as a controller C, which controls the pressure of the coolant, is realized using the calculation function of a PLC4. The PLC4 is a so-called computer equipped with a CPU, a memory, various input/output devices, an A/D converter, a D/A converter, and the like, and as a result of a program for the machine tool 100 stored in the memory being executed, at least the function of the above-described controller C is realized by cooperation of various devices.

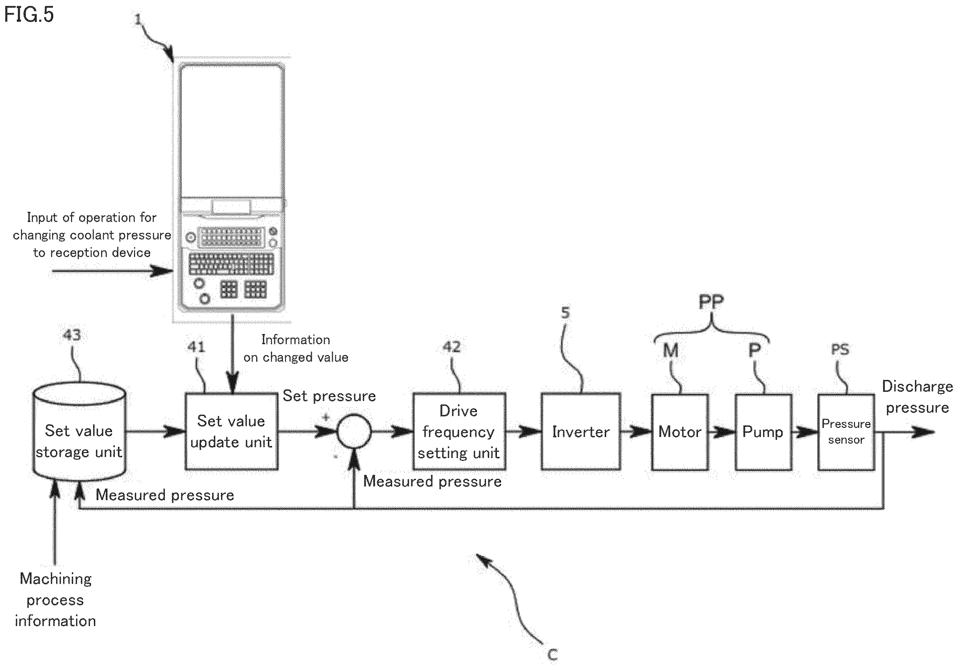

The following will describe a configuration for controlling the pressure of coolant to be discharged into the machine and a coolant pressure adjustment work performed by the operator, with reference to FIG. 5.

As shown in FIG. 5, the function of the controller C is realized by cooperation of a set value storage unit 43, a set value update unit 41, and a drive frequency setting unit 42, the inverter 5, the pump device PP, the pressure sensor PS, the operation panel 1, and the like, whose functions are realized by the PLC4.

The set value storage unit 43 stores at least the initial set pressure of the coolant to be discharged as, for example, a through spindle coolant as a set value. The initial set pressure (set value at initial setting) is a value at factory shipment determined, for example, by conducting experiments under used conceivable and representative tools TL and machining conditions.
The initial set pressure is stored together as a pair with process data indicating machining process information at the time of the experiment. Based on the machining process information obtained by analyzing the NC program and the like, the initial set pressure is used when there is no set pressure corresponding to the machining process information stored in the set value storage unit 43. If the set pressure corresponding to the machining process is stored, this set pressure is output to the set value update unit 41. In addition, as described later, when the current set pressure is changed by the operator's operation on the operation panel 1, and the machining process is completed, the set value storage unit 43 newly stores the changed value and process data as a pair.

When an input of the decrease operation key 18 or the increase operation key 19, which is a reception device, is given by the operator's operation, the set value update unit 41 changes the current set pressure output from the set value storage unit 43 by a predetermined amount. Conversely, if no input of the decrease operation key 18 or increase operation key 19 is given by the operator, the set pressure output from the set value storage unit 43 is maintained as is.

The drive frequency setting unit 42 sets the frequency of a current output from the inverter 5 so that the deviation between the discharge pressure of the coolant measured by the pressure sensor PS and the set pressure output from the set value update unit 41 is small. Here, the relationship between the drive frequency of a motor M and the discharge pressure output from a pump P is obtained in advance, and an appropriate frequency is set based on that relationship.

The following will describe how the operator adjusts the injection condition of the spindle through coolant in the machine tool 100 configured in this manner. First, when the spindle through coolant is turned on using the operation panel 1, the controller C controls the pump device PP based on pressure feedback control using the initial set pressure stored in the set value storage unit 43. The operator observes the inside of the machining area through the observation window OW provided in the machining area door DR1 and checks whether or not the coolant is sprayed from the leading end of the tool TL in the desired state. If the force of the coolant is stronger than the force required for the machining process or the like, the operator presses the decrease operation key 18 one or more times while observing the inside of the machine tool, and lowers the set pressure. At this time, the set value update unit 41 lowers the set pressure immediately upon the decrease operation key 18 being pressed, allowing the operator to adjust the set pressure without taking his or her eyes off the inside of the machine tool. In other words, it is not necessary to alternately perform changing the set pressure and checking the interior state of the machine tool. Also, if the operator sets the set pressure too low, the operator can press the increase operation key 19 one or more times to increase and adjust the set pressure. Furthermore, when the set pressure is changed by the operator, the changed set pressure and process data are stored as a pair in the set value storage unit 43 at the end of the machining process. If the same process data is detected when executing another NC program, the set value storage unit 43 outputs this changed set pressure from the start, rather than the initial set pressure.

In this way, in the machine tool 100 according to the first embodiment, the decrease operation key 18 and the increase operation key 19, which are reception devices for changing the set value for coolant discharge, are provided on the operation panel 1 located near the machining area door DR1, and the set value update unit 41 is configured to immediately change the set pressure when an operation is performed on the reception device. This allows the operator to easily adjust the set pressure while checking the coolant discharge state through the observation window OW formed in the machining area door DR1. Therefore, it is easier to adjust the coolant discharge state to the state suitable for the machining conditions and machining process, compared to in conventional cases.

Also, the set pressure changed by the operator is automatically stored in the set value storage unit 43, and it can be applied from the start when performing the same machining process in the future. In other words, the more the machine tool 100 is used, the less frequently the operator needs to adjust the coolant discharge state. This also makes it easier to automate the machining process.

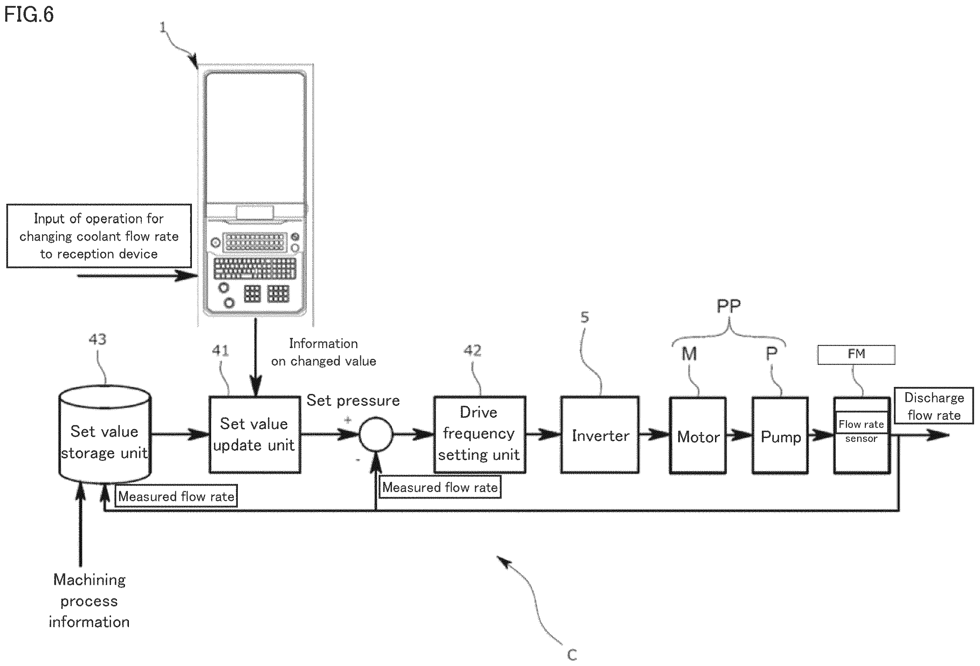

Next, a machine tool 100 of a second embodiment will be described with reference to FIG. 6. The machine tool 100 of the second embodiment differs in that it controls the coolant discharge state by flow rate feedback control instead of the pressure feedback control. As shown in FIG. 6, the set value stored in the set value storage unit 43 is the set flow rate, and the set value update unit 41 updates the set flow rate when an operation is performed on the reception device of the operation panel 1. The drive frequency setting unit 42 determines the frequency of a current output from the inverter 5 based on the deviation between the set flow rate and the measured flow rate. In addition, the decrease operation key 18 and the increase operation key 19 on the operation panel 1 are configured to change the set flow rate by a predetermined value or a predetermined percentage.

Even with the machine tool 100 of the second embodiment, the operator can easily adjust the coolant discharge state by adjusting the set flow rate while checking the interior state.

Other embodiments will now be described. The decrease operation keys and the increase operation keys are taken as examples of the reception device, but the present invention is not limited to these examples. For example, the reception device may be an operation dial for changing the set pressure or set flow rate of the coolant. Furthermore, the reception device is not limited to physical keys or dials, but may also be implemented on a touch panel display using software. In addition, a camera that enables checking of the interior state may be installed, so that the coolant discharge state can be checked on the display of the operation panel, and the operator can check how the coolant discharge state changes by entering operations on the reception device.

The embodiments have been described based on examples of changing the discharge state of the spindle through coolant, but the present invention is not necessarily limited to these examples. For example, a configuration is also possible in which the discharge state of shower coolant or chip flow coolant is also adjusted by the operator's operation on the reception device of the operation panel. Furthermore, coolant is not limited to being discharged into the machining area, but may also be discharged into the waiting area.

The vertical storage tank may be omitted, so that coolant is pumped and supplied from the collection tank to the discharge mechanisms. Any known pump of various operation principles may be used.

In addition, various modifications and combinations of parts of the embodiments may be made without departing from the spirit of the present invention.

**List of Reference Numerals**

| | | | | | | | |
|---|---|---|---|---|---|---|---|
| 100: | Machine tool, | DR1: | Machining area door, | DR2: | Waiting area door, | OW: | Observation window, |
| 1: | Operation panel, | CV: | Cover body, | | | | |
| 11: | Display, | 12: | Keyboard, | 13: | First operation dial, | 14: | Second operation dial, |
| 15: | Operation key group, | 16: | Function change area, | | | 17: | Operation area, |
| 18: | Decrease operation key (reception device), | | | | | | |
| 19: | Increase operation key (reception device), | | | 2: | Discharge mechanism, | | |
| ST: | Through spindle coolant mechanism, | 3: | Chip conveyor, | 31: | Filter, | | |
| TN1: | Collection tank, | TN2: | Storage tank, | PP: | Pump device, | | |
| PS: | Pressure sensor, | FM: | Flow rate sensor, | 4: PLC, 41: | Set value update unit, | | |
| 42: | Drive frequency setting unit, | 43: | Set value storage unit, | 5: | Inverter | | |

## Claims

1. A machine tool comprising:
a discharge mechanism configured to discharge coolant into the machine tool;
a tank configured to store the coolant to be supplied to the discharge mechanism;
a pump device that is provided on a flow path connecting the tank and the discharge mechanism and configured to pump the coolant;
a fluid sensor that is provided on the flow path and configured to measure a pressure or flow rate of the coolant flowing on the flow path;
a controller configured to control the pump device based on a deviation between a set value relating to the pressure or flow rate of the coolant and a measured value measured by the fluid sensor; and
an operation panel that is provided at a position outside the machine tool where an operator can observe an interior state of the machine tool, or that is configured to allow an image of the interior state of the machine tool to be checked,
wherein the operation panel includes a reception device configured to receive an operation for changing a current set value by a predetermined value or changing the current set value by a predetermined multiple, and
the controller includes a set value update unit configured to update the current set value to another value in response to the operation received by the reception device.

2. The machine tool according to claim 1,
wherein the reception device is configured to receive a touch operation or a rotation operation from the operator, and
the set value update unit is configured to update the set value immediately upon receiving the operation on the reception device.

3. The machine tool according to claim 2,
wherein the reception device includes a decrease operation key for decreasing the set value and a physical increase operation key for increasing the set value, and the decrease operation key and the increase operation key are configured to receive a push operation.

4. The machine tool according to claim 1,
wherein the operation panel further includes a speed-related operation key or operation dial configured to receive an operation for changing a speed of a table or a spindle, and
the reception device is provided separately from the speed-related operation key or operation dial.

5. The machine tool according to claim 1, further comprising:
an observation window that is formed in a cover body or door that separates the inside from the outside, and is used to observe the inside of the machine tool from the outside,
wherein the operation panel is provided near the observation window.

6. The machine tool according to claim 1, further comprising:
a camera provided inside the machine tool,
wherein the operation panel further includes a display that displays a moving image captured by the camera.

7. The machine tool according to claim 1, further comprising:
a set value storage unit configured to store at least the set value in initial setting and output the set value to the set value update unit,
wherein the set value storage unit is configured to store a pair of changed set value, which is a set value changed by the operation on the reception device, and process data that indicates information relating to a machining process in which the changed set value is used, and
if there is the changed set value that corresponds to the input process data, the set value storage unit is configured to output the changed set value to the set value update unit.

8. The machine tool according to claim 1,
wherein the pump device includes a pump and a motor configured to drive the pump, and
the controller includes:
an inverter configured to supply a current at a set frequency to the motor; and
a frequency setting unit configured to set the frequency of the current output by the inverter so that the deviation between the set value and the measured value is small.

9. The machine tool according to claim 1,
wherein the fluid sensor is a pressure sensor provided on the flow path between the discharge mechanism and the pump device, and
the controller is configured to perform pressure feedback control on the pump device.

10. The machine tool according to claim 1,
wherein the fluid sensor is a flow rate sensor provided on the flow path between the discharge mechanism and the pump device, and
the controller is configured to perform flow rate feedback control on the pump device.

11. A coolant control method using a machine tool provided with: a discharge mechanism configured to discharge coolant into the machine tool; a tank configured to store the coolant to be supplied to the discharge mechanism; a pump device that is provided on a flow path connecting the tank and the discharge mechanism and configured to pump the coolant; a fluid sensor that is provided on the flow path and configured to measure a pressure or flow rate of the coolant flowing on the flow path; a controller configured to control the pump device based on a deviation between a set value relating to the pressure or flow rate of the coolant and a measured value measured by the fluid sensor; and an operation panel that is provided at a position outside the machine tool where an operator can observe an interior state of the machine tool, or that is configured to allow an image of the interior state of the machine tool to be checked, the operation panel including a reception device configured to receive an operation for changing a current set value by a predetermined value or changing the current set value by a predetermined multiple,
wherein the controller is caused to update the current set value to another value in response to the operation received by the reception device.

12. A machine tool program used in a machine tool provided with: a discharge mechanism configured to discharge coolant into the machine tool; a tank configured to store the coolant to be supplied to the discharge mechanism; a pump device that is provided on a flow path connecting the tank and the discharge mechanism and configured to pump the coolant; a fluid sensor that is provided on the flow path and configured to measure a pressure or flow rate of the coolant flowing on the flow path; a controller configured to control the pump device based on a deviation between a set value relating to the pressure or flow rate of the coolant and a measured value measured by the fluid sensor; and an operation panel that is provided at a position outside the machine tool where an operator can observe an interior state of the machine tool, or that is configured to allow an image of the interior state of the machine tool to be checked, the operation panel including a reception device configured to receive an operation for changing a current set value by a predetermined value or changing the current set value by a predetermined multiple,
wherein the controller functions as a set value update unit configured to update the current set value to another value in response to the operation received by the reception device.
